# EUROPÄISCHE PATENTSCHRIFT

(11) **EP 4 396 532 B1**
(45) Veröffentlichungstag und Bekanntmachung des Hinweises auf die Patenterteilung: **03.12.2025**
(21) Anmeldenummer: 22751282.9
(22) Anmeldetag: 26.07.2022
(51) Int. Cl.: G01C 21/30, G06T 7/80, G06V 20/54, G08G 1/01

(54) **VERFAHREN ZUR KALIBRIERUNG EINER STRASSENÜBERWACHUNGSEINRICHTUNG UND STRASSENÜBERWACHUNGSSYSTEM**
METHOD FOR CALIBRATING A ROAD MONITORING DEVICE, AND ROAD MONITORING SYSTEM
PROCÉDÉ D'ÉTALONNAGE D'UN DISPOSITIF DE SURVEILLANCE DE ROUTE ET SYSTÈME DE SURVEILLANCE DE ROUTE

(30) Priorität: 03.09.2021 DE 102021209698
(43) Veröffentlichungstag der Anmeldung: 10.07.2024
(73) Patentinhaber: AUMOVIO Germany GmbH, 60488 Frankfurt am Main (DE)
(72) Erfinder: GOLDHAMMER, Michael, 63755 Alzenau (DE)
(74) Vertreter: Aumovio Corporation
(86) Internationale Anmeldenummer: PCT/DE2022/200167
(87) Internationale Veröffentlichungsnummer: WO 2023/030587

(56) Entgegenhaltungen:
- DE-A1- 102007 001 649
- DE-B4- 102011 100 628
- LILI HUANG: "Roadside camera calibration and its application in length-based vehicle classification", INFORMATICS IN CONTROL, AUTOMATION AND ROBOTICS (CAR), 2010 2ND INTERNATIONAL ASIA CONFERENCE ON, IEEE, PISCATAWAY, NJ, USA, 6 March 2010 (2010-03-06), pages 329 - 332, XP031663735, ISBN: 978-1-4244-5192-0
- DAILEY D J ET AL: "Dynamic camera calibration of roadside traffic management cameras for vehicle speed estimation", IEEE TRANSACTIONS ON INTELLIGENT TRANSPORTATION SYSTEMS, IEEE, PISCATAWAY, NJ, USA, vol. 4, no. 2, 1 June 2003 (2003-06-01), pages 90 - 98, XP011104438, ISSN: 1524-9050, DOI: 10.1109/TITS.2003.821213

## Beschreibung

Die Erfindung betrifft ein Verfahren zur Kalibrierung einer Straßenüberwachungseinrichtung und Straßenüberwachungssystem mit zumindest einer solchen Straßenüberwachungseinrichtung.

Moderne Anwendungen im Bereich intelligenter Infrastruktur nutzen immer leistungsfähigere Sensorik zur Detektion von Verkehrsteilnehmern. Wurden zu diesem Zweck lange Zeit fast ausschließlich in den Fahrbahnbelag eingelassene Induktionsschleifen eingesetzt, werden inzwischen Sensoren mit deutlich größerem Erfassungsbereich wie Kameras, Radare und Laserscanner verwendet. Entsprechende Algorithmen erlauben damit automatische Klassifikation, Lokalisierung und Tracking von Verkehrsteilnehmern in Echtzeit. Zukünftige Anwendungen werden diese erweiterten Objektinformation in erhöhtem Umfang nutzen, um unter Anderem Fahrerassistenzsysteme und autonomes Fahren zu unterstützen.

Voraussetzung vieler dieser Anwendungen ist die Objektlokalisierung in einem definierten Weltkoordinatensystem, um beispielsweise in Kreuzungsbereichen die einzelnen Fahrspuren noch auflösen und die Objekte entsprechend unterscheiden zu können. Für die Transformation aus einem Sensorkoordinatensystem in das Weltkoordinatensystem wird in der Regel zuvor mittels Kalibrierung die Position und Ausrichtung der Sensoren bestimmt. Diese erfolgt für gewöhnlich durch die Platzierung von in den Sensordaten einfach identifizierbaren und lokalisierbaren Referenzobjekten, deren Position zugleich im Weltkoordinatensystem vermessen wird, z. B. mittels Differential GPS. Hierzu können einzelne statische Positionen im Sichtfeld des Sensors vermessen werden oder eine größere Zahl von Positionen durch die zeitgestempelte Aufzeichnung eines bewegten auf einem Fahrzeug montierten Targets erzeugt werden.

So beschreibt die EP 2858055 B1 ein entsprechendes Verfahren zur Kalibrierung eines Straßenüberwachungssystems mit einer Vielzahl von Fahrzeugüberwachungseinrichtungen, wobei die Vielzahl von Fahrzeugüberwachungseinrichtungen dazu ausgelegt sind, eine Position eines Fahrzeugs, das den Überwachungsbereich durchfährt, zu messen. Kontrolliert durch eine ECU und synchronisiert mit einem globalen Zeitsignal wird zur Kalibrierung der Vielzahl von Fahrzeugüberwachungseinrichtungen ein Kalibrierungsfahrzeug mit einer Vielzahl von vordefinierten Kalibrierungsmarkern bereitgestellt, wobei während der Durchfahrt des Kalibrierungsfahrzeugs durch den Überwachungsbereich jede Fahrzeugüberwachungseinrichtung eine Position ihrer zugeordneten Kalibrierungsmarker misst, wobei das Messen zu einer vorbestimmten Zeit durchgeführt wird.

Zudem ist eine Referenz-Fahrzeugüberwachungseinrichtung erforderlich, die ein Referenzkoordinatensystem definiert. Die Vielzahl von Fahrzeugüberwachungseinrichtungen wird so kalibriert, dass die Position der jeweiligen Kalibrierungsmarker in dem Referenzkoordinatensystem einer erwarteten Position in dem Referenzkoordinatensystem entspricht. Der Aufwand für eine solche Kalibrierung ist damit erheblich und der Einsatz von Referenzfahrzeugen mit vordefinierten Kalibrierungsmarkern für eine sich wiederholende Kalibrierung im laufenden Betrieb ungeeignet.

Die Methoden setzen also meist ein qualitativ hochwertiges Referenzsystem zur Positionsbestimmung voraus. Selbst bei technischer Verfügbarkeit ist z.B. nicht ausreichender GPS-Empfang in Häuserschluchten ein Problem. Für eine statische Positionierung von Referenzobjekten muss unter Umständen in den laufenden Verkehrsfluss eingegriffen werden, z. B. müssen Fahrspuren zeitweise gesperrt werden. Die Vermessung einer größeren Zahl statischer Punkte kann zeitaufwändig sein. Bei mehreren Sensoren mit kaum überlappenden Sichtbereichen skaliert der Zeitaufwand linear und eignet sich daher auch nicht für eine wiederholende Kalibrierung im normalen Verkehr.

In der DE 10 2007 001 649 A1 ist ein Verfahren zur Kalibrierung einer Überwachungskamera gezeigt, die eine reale Überwachungsszene, die in Weltkoordinaten beschreibbar ist, auf ein Überwachungsbild, welches in Bildkoordinaten beschreibbar ist, abbildet, wobei mindestens eine Trajektorie eines bewegten Objekts in der Überwachungsszene bestimmt wird, die einen Satz von Positionsdaten umfasst, der die Position des bewegten Objektes in Bildkoordinaten zeitabhängig beschreibt, und wobei die Trajektorie zur Kalibrierung der Überwachungskamera verwendet wird, indem unter Verwendung eines Bewegungsmodells des bewegten Objekts die zeitabhängigen Positionsdaten des bewegten Objekts in Distanzen in der realen Überwachungsszene umgerechnet werden.

Wird ein Objekt auf einem bewegenden Fahrzeug verwendet, müssen die Positionen des Referenzobjekts als auch die Sensordaten selbst zeitgestempelt sein, um eine Zuordnung zu ermöglichen. Es müssen zusätzliche Algorithmen implementiert werden, um die Targets in den Sensordaten detektieren zu können. Auch eine manuelle Markierung ist mit zusätzlichem Aufwand verbunden.

In der DE 10 2011 100 628 B4 ist die Verwendung von festen kartierten Strukturen zur Kalibirierung beschrieben.

In Lili Huang "Roadside camera calibration and its application in length-based vehicle classification" und In Todd N. Schoepflin & Daniel J. Dailey "Dynamic camera calibration of roadside traffic management cameras for vehicle speed estimation" ist jeweils beschrieben, dass eine ist die Bildanalyse verwendet werden kann, um verschwindende Punkte der Fahrbahnmarkierung zu bestimmen und zur Kamerakalibrierung zu verwenden.

Für Fahrzeugsensorik verwendete automatische Kalibriermethoden nutzen in der Regel die Eigenbewegung des Fahrzeugs, die bei Infrastruktursensorik nicht gegeben ist.

Die Aufgabe der vorliegenden Erfindung ist es, ein Kalibrierungsverfahren anzugeben, welches flexibler einsetzbar ist. Diese Aufgabe wird durch die Merkmale der unabhängigen Ansprüche gelöst. Vorteilhafte Weiterbildungen der Erfindung ergeben sich aus den Unteransprüchen, wobei auch Kombinationen und Weiterbildungen einzelner Merkmale miteinander denkbar sind.

Ein zugrundeliegender Gedanke wenigstens einer Ausführungsform des Verfahrens entsprechend der Offenbarung besteht darin, dass für eine vorgegebene Kalibrierungsperiode im normalen Verkehr die Positionen erkannter Objekte im Überwachungsbereich in Bezug auf die Straßenüberwachungseinrichtung erfasst und daraus eine akkumulierte Objektaufenthaltskarte gebildet wird. Das Verfahren eignet sich nach diesseitiger Erprobung insbesondere für Radarsensoren, ist aber auch geeignet für Kamerasensoren und sonstige Umfeldsensoren mit Positionserfassung, insbesondere und vorzugsweise mit Erfassung der Geschwindigkeit der Objekte.

Als akkumulierte Objektaufenthaltskarte ist dabei die Anzahl von erkannten Objekten je Position innerhalb der Kalibrierungsperiode zu verstehen, also wie häufig an einer Position Objekte erkannt werden, und bildet dies insgesamt quasi eine Häufigkeitsverteilung von Objekten innerhalb des Überwachungsbereichs. Dabei weist diese Objektaufenthaltskarte zwar einen festen Bezug zum Sensor auf, sind die Positionen der Objekte also innerhalb des Sensorkoordinatensystems bekannt, ohne Kalibrierung ist deren Position jedoch bezüglich dem Weltkoordinatensystem zumindest für die Verkehrsführung in der Regel zu ungenau. Die akkumulierte Objektaufenthaltskarte ist ganz erheblich vom Verkehr während der Kalibrierungsperiode abhängig, durch geeignete Wahl der zeitlichen Lage und Länge der Kalibrierungsperiode oder einer Wiederholung der Kalibrierung über mehrere Zeiträume mit bekanntermaßen unterschiedlichem Verkehrsaufkommen oder Fließrichtung des Verkehrs kann die Kalibrierung immer weiter verbessert werden. Es sei hervorgehoben, dass die akkumulierte Objektaufenthaltskarte gerade keiner Trajektorienanalyse der Objekte bedarf und rein die jeweiligen Positionen eines Objekts akkumuliert werden.

Zudem ist aber eine Weltkoordinatenkarte der Fahrspuren oder Fahrspurmitten für den Überwachungsbereich mit deren Position und Ausrichtung in einem vorgegebenen Weltkoordinatensystem vorhanden, was aber heutzutage für die Navigationssysteme in aller Regel gegeben ist.

Die Position und Ausrichtung der Straßenüberwachungseinrichtung in Bezug auf die erfassten Objekte ist fest und bekannt, bildet also in dem Sinne ein Sensorkoordinatensystem, welches aber auf das Weltkoordinatensystem kalibriert werden muss.

Durch rechnerbasiertes Verschieben und/oder Drehen der akkumulierten Objektaufenthaltskarte oder einer daraus abgeleiteten, insbesondere gefilterten Objektaufenthaltskarte und rechnerbasiertes Ermitteln eines jeweiligen Übereinstimmungsmaßes mit der Weltkoordinatenkarte wird eine Position und Ausrichtung der Objektaufenthaltskarte in der Weltkoordinatenkarte mit einem vorgegebenen, insbesondere möglichst hohen, zumindest aber hinreichenden Übereinstimmungsmaß bestimmt.

Aus dieser, das vorgegebene Übereinstimmungsmaß aufweisenden Position und Ausrichtung der Objektaufenthaltskarte bzw. abgeleiteten, insbesondere gefilterten Objektaufenthaltskarte kann nun die Istposition und Ístausrichtung der Straßenüberwachungseinrichtung abgeleitet werden, indem deren Position und Ausrichtung zu den Objekten und damit der Objektaufenthaltskarte wiederum fest und bekannt ist.

Die Position der Objekte wird nun entsprechend kalibriert, also die in dem Sensorkoordinatensystem gemessene Position anhand der nun bekannten Position der Straßenüberwachungseinrichtung im Weltkoordinatensystem exakter ermittelt.

Als Methode zur Ermittlung des Übereinstimmungsmaßes wird vorzugsweise die Kreuzkorrelation berechnet.

Weder die Akkumulierung der Objektpositionen noch das Verschieben und/oder Drehen der akkumulierten Objektaufenthaltskarte geschweige denn die Ermittlung eines jeweiligen Übereinstimmungsmaßes mit der Weltkoordinatenkarte sind dabei aufgrund der Menge an Daten und Komplexität der Berechnung noch manuell rein durch den menschlichen Geist möglich, sondern wird hier ein automatisiertes Verfahren beschrieben, welches automatisiert und rechnerbasiert abläuft, wobei die erforderlichen Daten, deren Speicherung und die Rechenprozesse lokal in der Straßenüberwachungseinrichtung oder einer gemeinsamen Recheneinheit des Straßenüberwachungssystems in einem entsprechenden Prozessor für eine Mehrzahl von Straßenüberwachungseinrichtungen oder sogar cloudbasiert über eine Datenkommunikation in einem Cloudspeicher oder entsprechenden Serverrechner oder dergleichen erfolgen können.

Da die Daten der akkumulierten Objektaufenthaltskarte vom Verkehrsgeschehen im Kalibrierungszeitraum abhängig sind und auch eventuell sogar einzelne Messfehler, also fälschlich detektierte Objekte enthalten können, wird die akkumulierten Objektaufenthaltskarte insbesondere automatisiert rechnerbasiert zwei aufeinander abgestimmten morphologischen Operationen unterzogen.

Zunächst erfolgt eine Dilatation, um eine gewisse Unschärfe in der Positionsbestimmung durch Verbindung zu einem Objektaufenthaltsraum zu erweitern. Nachfolgend erfolgt eine Erosion, wobei ein jeweiliges Filtermaß bei der Erosion um ein vorgegebenes Maß größer als das Filtermaß bei der Dilatation gesetzt ist, so dass eben Positionen mit äußerst geringer Häufigkeit von Objekten aus der Betrachtung eliminiert werden.

Als Filtermaß oder auch Filterkernel wird dabei jener Bereich definiert, in welchem bei der Dilation Werte zusammengefasst bzw. bei der Erosion eliminiert werden. Dilatation und Erosion sind dabei an sich aus dem digitalen Bildverarbeitung und Mustererkennung bekannte Verfahren, die sich jedoch sehr gut für deren Anwendung zur Kalibrierung der Position und Ausrichtung des Sensors eignen.

Hervorzuheben ist dabei, dass eine so gefilterte Objektaufenthaltskarte ja gerade nicht den Anspruch erhebt, eine möglichst vollständige Wiedergabe der Positionen aller Objekte darzustellen, sondern nur eine hinreichende Datenbasis darstellen muss, um diese so gefilterte Objektaufenthaltskarte anhand der Weltkoordinatenkarte auszurichten. Insofern kann es nämlich sogar äußerst vorteilhaft sein, sich nur auf die wesentlichen, durch wiederholtes Benutzen maßgeblichen Positionen zu beschränken und sich atypisch verhaltende Einzelobjekte beziehungsweise deren Positionen zu eliminieren, um deutlich einfacher ein Übereinstimmungsmaß ermittelt zu können und dennoch aussagekräftiger die Istposition und Ausrichtung bestimmen zu können.

Ausgehend von einer vorgegebenen Ausgangsposition und Ausgangsausrichtung wird nun eine Position und Winkelrichtung mit einem vorgegebenen, vorzugsweise großen Übereinstimmungsmaß bestimmt. Als Ausgangsposition und Ausgangsausrichtung können in bevorzugter Weiterbildung die Grobinformationen über die Strassenüberwachungseinrichtung verwendet werden oder ansonsten an einer Ecke oder in der Mitte der Kreuzung gemäß der Weltkoordinatenkarte gestartet werden.

Entsprechend wenigstens einer Ausführungsform wird in einem ersten Schritt die Objektaufenthaltskarte oder daraus abgeleitete, insbesondere gefilterte Objektaufenthaltskarte zunächst in vorgegebener erster Schiebeschrittweite vorzugsweise in beide Achsen der Weltkoordinatenkarte über den für den Überwachungsbereich denkbaren Ausschnitt der Weltkoordinatenkarte verschoben. Ein entsprechendes Verfahren ist dabei unter dem Begriff des Template Matching aus der digitalen Bildbearbeitung und Mustererkennung an sich bekannt und wird hier auf die Kalibrierung zwischen Objektaufenthaltskarte und Weltkoordinatenkarte angewandt.

Dann wird die Objektaufenthaltskarte oder daraus abgeleitete, insbesondere gefilterte Objektaufenthaltskarte in vorgegebener erster Drehschrittweite gedreht und das Verschieben wiederholt, wechseln sich Verschieben und Drehen als ab, bis alle Positionen im vorgegebenen Ausschnitt der Weltkoordinatenkarte mit der ersten Schiebeschrittweite und Drehschrittweite getestet und eine Position und Ausrichtung mit dem in diesem Durchlauf größten Übereinstimmungsmaß gefunden wurde.

Gemäß einer bevorzugten Weiterbildung ist vorgesehen, dass nach dem ersten Schritt zumindest in einem weiteren Schritt die Objektaufenthaltskarte oder daraus abgeleitete, insbesondere gefilterte Objektaufenthaltskarte um die im ersten Schritt ermittelte Position und Ausrichtung in vorgegebener zweiter, gegenüber der ersten feinerer Schrittweise verschoben und dann gegebenenfalls nochmals in vorgegebener zweiter, gegenüber der ersten feinerer Drehschrittweite nochmals gedreht und jeweils geprüft wird, ob ein noch höheres Übereinstimmungsmaß erreicht werden kann. Gegebenenfalls kann diese Verfeinerung auch nochmals mit einer dritten, noch feineren Schrittweite und/oder Drehschrittweite wiederholt werden.

Gemäß einer bevorzugten Ausgestaltung ist der Straßenüberwachungseinrichtung aber zumindest eine grobe Sollposition und/oder Sollausrichtung in Bezug auf die Weltkoordinatenkarte vorgegeben und wird die Kalibrierung ausgehend von dieser Sollposition und/oder Sollausrichtung gestartet.

In einer Weiterbildung ist zudem vorgesehen, dass die erkannten Objekte hinsichtlich Objekttypenklassen und/oder deren Positionsänderungsgeschwindigkeit bewertet und in die akkumulierte Objektaufenthaltskarte nur jene Objekte aufgenommen werden, welche vorgegebenen Objekttypenklassen und/oder einem vorgegebenen Bereich der Positionsänderungsgeschwindigkeit entsprechen, also beispielsweise insbesondere stehende Objekte komplett eliminiert werden.

Da die Akkumulierung der Objektkarte vom aktuellen Verkehr im Überwachungsbereich abhängig ist, wird die Kalibrierungsperiode vorzugsweise zeitlich variabel an die Anzahl erkannter Objekte angepasst, insbesondere verlängert, wenn innerhalb des ersten vorgegebenen Sollkalibrierungszeitraums nicht eine vorgegebene Anzahl von Objekten zur akkumulierten Objektaufenthaltskarte zugeordnet werden konnten und/oder das erreichbare Übereinstimmungsmaß unter einem Mindestwert bleibt.

Wie schon eingangs erwähnt, erfolgt die Kalibrierung entsprechend zumindest einer Ausführungsform während des normalen Verkehrs im Überwachungsbereich und wird insbesondere zyklisch wiederholt.

Außer der Weltkoordinatenkarte sind keine weiteren Referenzen erforderlich, insbesondere keine Erkennung und Vermessung von zusätzlichen Referenzpunkten, insbesondere keine statischen, vermessenen Referenzpunkte im Überwachungsbereich oder Referenzpunkte an Testfahrzeugen mit definiertem Fahrverhalten erforderlich, sondern eignet sich das Verfahren für die Anwendung der im normalen Verkehr auftretenden Objekte und kann daher auch problemlos zyklisch wiederholt werden, beispielsweise zu unterschiedlichen Tageszeiten mit unterschiedlichem Verkehrsverhalten oder auf bestimmte Ereignisse oder Sensorsignale hin oder sogar permanent parallel zur eigentlichen Verkehrsüberwachung betrieben werden, sofern der erforderliche Rechenaufwand zur Verfügung steht.

Das Verfahren ist vorzugsweise eingebettet in ein Straßenüberwachungssystem mit zumindest einer, vorzugsweise einer Vielzahl solcher Straßenüberwachungseinrichtung(en) für die Abdeckung der unterschiedlichen Blickwinkel auf einen Kreuzungsbereich, wobei sich die Überwachungsbereiche der jeweiligen Straßenüberwachungseinrichtungen dabei entsprechend zumindest einer Weiterbildung zumindest teilweise überschneiden. Es ist eine Recheneinheit zur Auswertung der Signale der Straßenüberwachungseinrichtungen vorgesehen und wird in einem Speicher der Recheneinheit lokal oder über eine Datenkommunikation in einem Cloudspeicher erreichbar eine Weltkoordinatenkarte der Fahrspuren oder Fahrspurmitten für den Überwachungsbereich mit deren Position in einem vorgegebenen Weltkoordinatensystem hinterlegt.

Mittels der Recheneinheit lokal oder einem über eine Datenkommunikation erreichbaren Serverrechner erfolgt das automatisierte, rechnerbasierte Verarbeiten der Objektdaten und/oder Filtern der akkumulierten Objektaufenthaltskarte, das Verschieben und/oder Drehen der akkumulierten Objektaufenthaltskarte oder daraus abgeleiteten Objektaufenthaltskarte und Ermitteln der jeweiligen Übereinstimmungsmaße.

Die Erfindung wird nachfolgend anhand von Ausführungsbeispielen unter Bezugnahme auf die Figuren näher erläutert. Es zeigen:
Figur 1 stilisierte Skizze einer Kreuzungssituation mit zumindest einer Straßenüberwachungseinrichtung und deren Überwachungsbereich
Figur 2 Weltkoordinatenkarte der Fahrspurmitten für die Kreuzung gemäß Figur 1 mit Position im Weltkoordinatensystem
Figur 3 akkumulierte Objektaufenthaltskarte
Figur 3A Detailausschnitt aus der Objektaufenthaltskarte gemäß Fig. 3
Figur 4 gefilterte Objektaufenthaltskarte
Fig. 4A Detailausschnitt aus der gefilterten Objektaufenthaltskarte
Figur 5 gefilterte Objektaufenthaltskarte ausgerichtet auf der Weltkoordinatenkarte

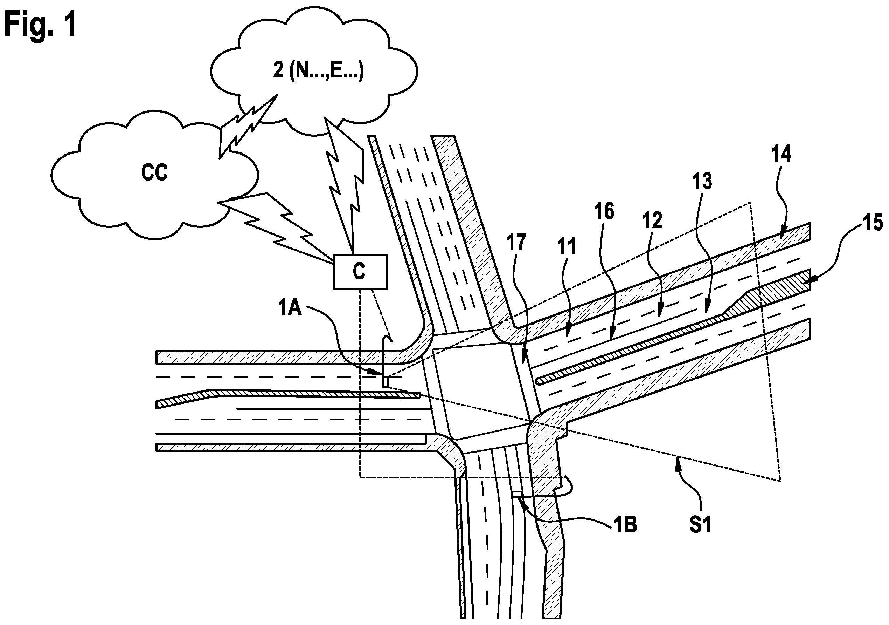

Die Figur 1 zeigt stilisiert eine Kreuzungssituation mit zumindest einer 1. Straßenüberwachungseinrichtung 1A und deren Überwachungsbereich S1, welche zumindest einen Großteil der Kreuzung sowie eine der auf die Kreuzung führenden Straßen mit ihren Fahrspuren 11,12 und 13 und Randbereichen 14 und 15 erfasst. Die hier skizzenhaft mit dargestellten Fahrspurlinien 16 dienen dem Verständnis, sind jedoch für die als Radarsensor ausgebildete Straßenüberwachungseinrichtung 1A nicht notwendigerweise sichtbar. Insbesondere erfassen die Straßenüberwachungseinrichtungen neben dem Autoverkehr auch Fußgänger, Radfahrer und sonstige bewegte Objekte im Überwachungsbereich und ist daher auch der Fußgängerüberweg 17 hier mit dargestellt. Jedoch wird dieser Verkehrsweg und Fußgänger zur Vereinfachung dieses Ausführungsbeispiels hier nicht weiter berücksichtigt.

Die Figur 1 zeigt zudem eine weitere Straßenüberwachungseinrichtung 1B, die eine andere, ebenfalls auf die Kreuzung führende Straße sowie einen überschneiden Bereich der Kreuzung erfasst. Weitere zusätzliche Straßenüberwachungseinrichtungen (nicht dargestellt) können beispielsweise je nach Anzahl der Straßen, Komplexität der Kreuzung und die Größe der Überwachungsbereiche der Straßenüberwachungseinrichtungen sowie eventuelle Hindernisse in deren Blickwinkeln vorgesehen sein. Die Straßenüberwachungseinrichtungen, hier also zumindest gezeigt 1A und 1B werden zu einem Straßenüberwachungssystem zusammengeführt und sind mit einer Recheneinheit C verbunden, welche die Signale der Straßenüberwachungseinrichtungen auswertet. Zudem steht insbesondere cloudbasiert und über eine hier skizzenhaft drahtlos dargestellte Datenkommunikation verfügbarer Cloudspeicher für eine noch näher zu erläuternde Weltkoordinatenkarte 2 (N...,E...) sowie ein Serverrechner CC für die zentralisierte Durchführung der vergleichsweise rechenintensiven Prozessschritte des Verfahrens zur Verfügung, welche im Folgenden näher erläutert werden.

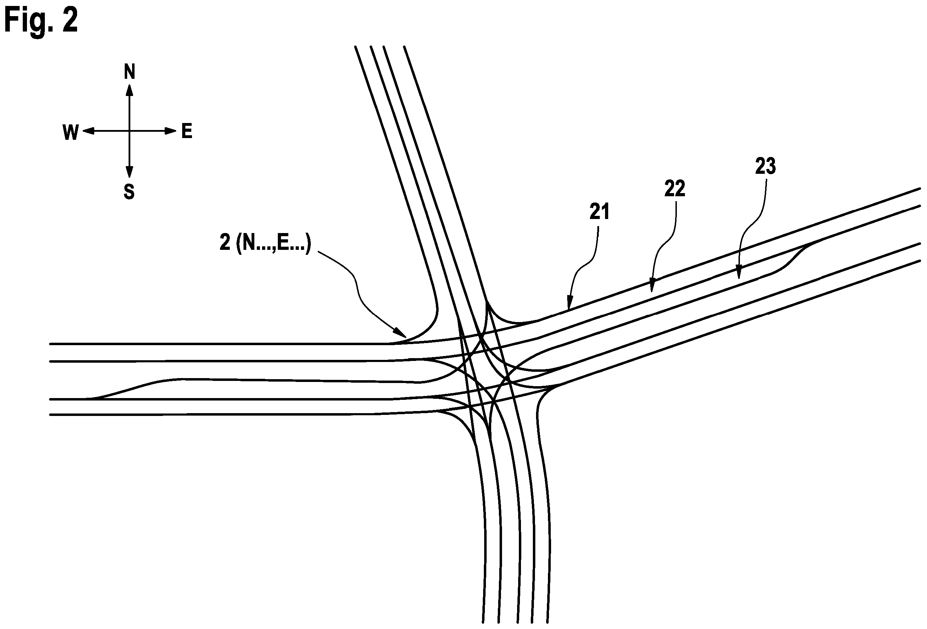

Die Figur 2 zeigt nun für den in Fig. 1 gezeigten Kreuzungsbereich die Weltkoordinatenkarte 2 (N...,E...) der Fahrspurmitten, wobei als Fahrspurmitte jeweils die Hälfte des Querabstands der die Fahrspur begrenzenden Fahrspurmarkierungen bzw. bei nicht vorhandener Fahrspur entsprechend analog ermittelte Linien bestimmt, also auf der Mitte zwischen den Fahrspuren verläuft und insbesondere alle verkehrskonformen Passagen insbesondere auch des Kreuzungsbereichs, d. h. alle denkbaren Abbiege-Vorgänge mit erfasst. Wie skizzenhaft durch das Koordinatensystem N,S,W,E und die N...,E... Werte verdeutlicht werden soll, liegt für diese Weltkoordinatenkarte 2 (N...,E...) Deren Position im Weltkoordinatensystem, insbesondere GPS oder auch den anderen mittlerweile für zur Verfügung stehenden Positionierungssystemen möglichst exakt und auch bezüglich der Ausrichtung in die Himmelsrichtungen exakt vermessen vor.

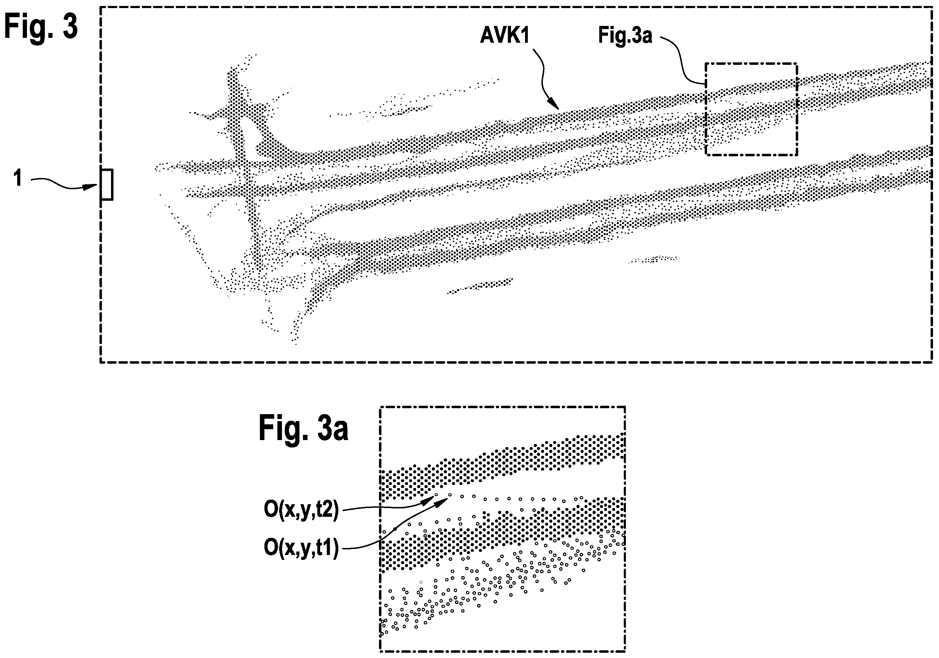

Die Figur 3 zeigt nun eine akkumulierte Objektaufenthaltskarte AVK1, wie diese über einen definierten Kalibrierungszeitraum während eines realen Fahrbetriebs mit normalen Fahrzeugen und anderen Verkehrsteilnehmern im Überwachungsbereich erfasst wurde. Diese akkumulierte Objektaufenthaltskarte AVK1 ist ausschließlich in Bezug auf die Straßenüberwachungseinrichtung, also im Sinne eines Sensorkoordinatensystems bekannt, nicht jedoch auf das Weltkoordinatensystem hin ausgerichtet, auch wenn hier in der Anmeldung schon aus Gründen der beschränken Darstellbarkeit und leichteren Übertragbarkeit eine annähernd gleiche Ausrichtung gewählt wurde.

An jeder Position, an dem die Straßenüberwachungseinrichtung, hier also ein Radarsensor ein Objekt detektiert, wird ein Wert für die Anzahl der Objektaufenthalte erhöht. Skizzenhaft wird dieser Wert hier als Grauwert dargestellt und mit zunehmender Anzahl und Häufigkeit von Objektaufenthalten an der jeweiligen Position immer dunkler, also schwärzer. Dies erfolgt hier ausschließlich aufgrund der Formvorschriften zur Anmeldung auf weißen Blatt, in der praktischen Ausgestaltung wird zur Visualisierung üblicherweise der Hintergrund jedoch schwarz gewählt und die Positionen mit zunehmendem Objektaufenthalt als weiß dargestellt. Wie insbesondere aus dem vergrößerten Ausschnitt gemäß Figur 3A zu erkennen ist, sind die einzelnen die die erkannten Positionen eines Objektes O(x,y,t1), O(x,y,t2) als einzelne Punkte dargestellt und bewusst keine aufwändige Trajektorie aus der Abfolge bestimmt.

Es sei aber nochmals klargestellt, dass die hier in den Figuren 3 und 3A dargestellte Objektaufenthaltskarte nur zur Visualisierung für die Anmeldung dient, rechnerseitig im Speicher jedoch rein als Werte der Häufigkeit des Objektaufenthalts an den jeweiligen Positionen umgesetzt sein kann.

**In** dem vorliegenden Ausführungsbeispiel wurden zudem die erkannten Objekte hinsichtlich Objekttypenklassen und deren Positionsänderungsgeschwindigkeit bewertet und in die akkumulierte Objektaufenthaltskarte nur jene Objekte aufgenommen werden, welche vorgegebenen Objekttypenklassen und einem vorgegebenen Bereich der Positionsänderungsgeschwindigkeit entsprechen, also stehende Objekte üblicherweise komplett ausgeblendet, hier zur Vereinfachung zudem auch Fußgänger oder andere extrem langsam fahrende Objekte, wobei neben der reinen Positionsänderungsgeschwindigkeit der Objekte eben auch deren Objekttypenklassen, beispielsweise aufgrund deren Formgebung oder Radarecho-Signatur zusätzlich bewertet werden kann. Sind weder die Bestimmung von Objekttypenklassen noch der Positionsänderungsgeschwindigkeit der Objekte oder nur eine der beiden Größen vorhanden, kann die Akkumulierung nur anhand der vorhandenen Daten oder ansonsten durch die Eigenschaften des Sensors, bspw. Reflexionsmaxima bei Radar-Sensorik selbst beschränkt werden.

Es sei aber dabei klargestellt, dass für die Verkehrserkennung an sich auch ein an einer Kreuzung stehendes Fahrzeug für die Steuerung des Verkehrsflusses zweckmäßigerweise detektiert wird, die hier gebildete akkumulierte Objektaufenthaltskarte jedoch ausschließlich die Kalibrierung der Position des Sensors im Zusammenspiel mit der Weltkoordinatenkarte dienen soll und daher eine Betrachtung rein des fließenden Autoverkehrs dafür hinreichend ist, zumal Fußgänger sich deutlich weniger an definierte Spurlinien halten und so deren Positionen weniger geeignet sind, um eine möglichst exakte Ausrichtung des Sensors zu ermitteln.

Es sei nochmals hervorgehoben, dass die Kalibrierung im normalen Verkehr im Überwachungsbereich erfolgt, also nur anhand der im normalen Verkehr auftretenden Objekte erfolgen kann und außer der Weltkoordinatenkarte keine weiteren Referenzen, insbesondere keine Erkennung und Vermessung von zusätzlichen Referenzpunkten, insbesondere ohne statische, vermessene Referenzpunkte im Überwachungsbereich oder Referenzpunkte an Testfahrzeugen mit definiertem Fahrverhalten erforderlich sind. So kann die Kalibrierung zyklisch wiederholt werden, beispielsweise auch zu anderen Tageszeiten mit anderem Verkehrsverlauf.

Die Kalibrierungsperiode kann zeitlich variabel an die Anzahl erkannter Objekte angepasst werden, insbesondere bspw. verlängert werden, wenn innerhalb des ersten vorgegebenen Sollkalibrierungszeitraums nicht eine vorgegebene Anzahl von Objekten zur akkumulierten Objektaufenthaltskarte zugeordnet werden konnten oder das erreichbare Übereinstimmungsmaß unter einer Mindestwert bleibt.

Nach Montage der Straßenüberwachungseinrichtung werden also zunächst Sensordaten aufgezeichnet, bis eine bestimmte Anzahl an Objekten detektiert wurde. Die Positionen der Objekte werden über die Messzeit hinweg in ein Raster akkumuliert. Ist eine Geschwindigkeitsinformation verfügbar, werden nur sich bewegende Objekte berücksichtigt, um die Differenzierung zu statischen Hintergrundobjekten zu verbessern.

Die entstandene akkumulierte Objektaufenthaltskarte AVK1 wird nun entsprechend dieses Ausführungsbeispiels anschließend nacheinander mit den an sich bekannten morphologischen Operationen Dilatation und Erosion gefiltert, um die Maxima des aktiven Verkehrsflusses klarer herauszustellen.

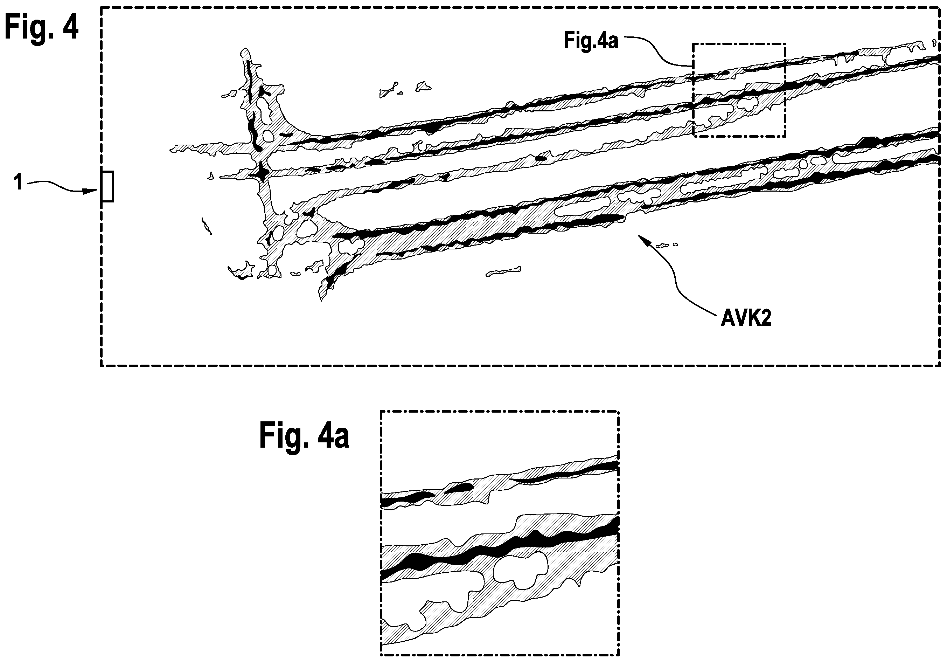

Die Dilatation verbindet dabei zunächst benachbarte Punkte zunächst, werden durch die folgende Erosion aber dann zu kleine bzw. nicht häufige Punkte eliminiert. Das Filtermaß, also der Filterkernel der Erosion wird dabei also etwas größer als der der Dilatation gewählt, um unerwünschte Einzelpunkte in der gefilterten Objektaufenthaltskarte AVK2 zu eliminieren, wie diese in Fig. 4 und ein Ausschnitt vergrößert in Fig.4A gezeigt wird. Gegenüber der ungefilterten Karte aus Figur 3 sind durch die Filterung die Objektpositionen und deren Häufigkeit verdichtete und dadurch die Fahrspuren bereits noch besser ablesbar, wobei die hier jetzt in helleren grau dargestellten Randbereiche für die nachfolgende Positionierung nicht so problematisch sind, wie vielleicht zu vermuten wäre, da die Übereinstimmung mit den Fahrspuren rein numerisch auf Basis beispielsweise der Kreuzkorrelation ermittelt wird und sich dennoch auch bei einem so unscharfen Bild eine relativ gute Abhängigkeit von der korrekten Ausrichtung insgesamt ergibt.

In einem ersten Schritt wird nun mit einer ersten Verschiebeschrittweite und Drehschrittweite jene Position und Winkelausrichtung gesucht, die zumindest ein vorgegebenes, vorzugsweise größtes Übereinstimmungsmaß aufweist.

In einem ersten Schritt wird die gefilterte Objektaufenthaltskarte AVK2 also in vorgegebener erster Schiebeschrittweite über einen vorgegebenen Ausschnitt der Weltkoordinatenkarte verschoben und dabei jene Position mit dem für diese Winkelausrichtung größten Übereinstimmungsmaß bestimmt. Für das Verschieben eignet sich dabei insbesondere der aus der digitalen Bildverarbeitung bekannte und in Software als Algorithmus verfügbare sogenannte Template Matching. Dann wird die gefilterte Objektaufenthaltskarte AVK2 vorgegebener erster, größerer Drehschrittweite gedreht und das Verschieben wiederholt.

Als Übereinstimmungsmaß wird vorzugsweise die Kreuzkorrelation der Punkte aus den beiden Karten, also der Weltkoordinatenkarte und der jeweiligen gedrehten und/oder verschobenen Objektaufenthaltskarte AVK2 erreicht.

Nach dem ersten Schritt wird vorzugsweise zumindest in einem zweiten Schritt die gefilterte Objektaufenthaltskarte AVK2 um die im ersten Schritt ermittelte Grobposition und Ausrichtung in vorgegebener zweiter, gegenüber der ersten feinerer Drehschrittweite nochmals gedreht und geprüft wird, ob ein noch höheres Übereinstimmungsmaß erreicht werden kann. Die AVK2 wird also im ersten Schritt in definierten Winkelschritten rotiert und per 2D Template Matching mit der Karte der Fahrspurmitten grob abgeglichen.

Um jene Winkelausrichtung und jene Position, die im ersten Schritt die maximale Übereinstimmung liefert, wird eine weitere Suche in kleineren Winkelschritten und/oder Verschiebeschritten durchgeführt, um das Optimum genauer zu lokalisieren.

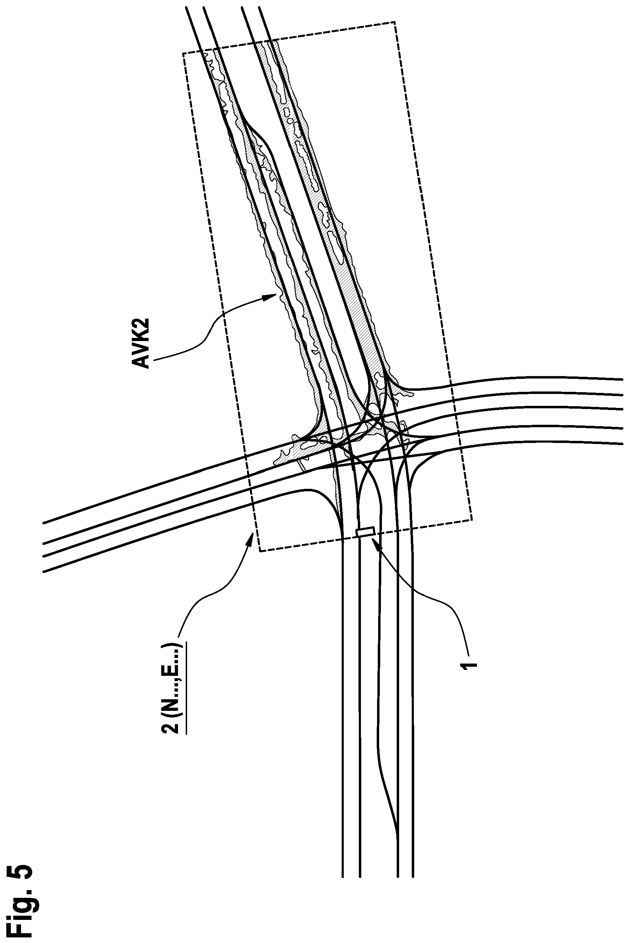

Fig.5 zeigt eine so durch Verschieben und Verdrehen auf der Weltkoordinatenkarte 2(N...,E...) der Fahrspuren beziehungsweise Fahrspurmitten ausgerichtete gefilterte Objektaufenthaltskarte AVK2.

Aus der finalen Lage des Optimums kann die Position und Azimut-Ausrichtung des Sensors 1 in der Karte, und damit in realen Weltkoordinaten bestimmt werden, also aus dieser gefundenen Position die Istposition und Ístausrichtung des Sensors abgeleitet und die Position der Objekte entsprechend genauer bestimmt werden.

Die Kalibrierung kann also während des laufenden Straßenverkehrs erfolgen, zyklisch wiederholt oder bei entsprechender Rechenkapazität theoretisch permanent mitlaufen. Es werden keine zusätzlichen Referenzobjekte oder keine hochgenau vermessenen Referenzpositionen benötigt. Eine Fehlausrichtung ("Misalignment") der Sensoren kann während des laufenden Betriebs durch Vergleich einer erneuten Kalibrierung mit dem Ergebnis der Ursprungskalibrierung festgestellt und gemeldet oder korrigiert, also eine automatische Nachkalibrierung durchgeführt werden, insbesondere wenn geringfügige Änderungen festgestellt werden.

Die Aufzeichnung der benötigten Daten ist parallel für mehrere Sensoren durchführbar und entsprechend können die komplexen Berechnungen auch ausgelagert durchgeführt werden.

## Patentansprüche

1. Rechnerbasiertes Verfahren zur Kalibrierung einer Straßenüberwachungseinrichtung (1A), welche einen vorgegebenen Überwachungsbereich (S1) erfasst und Objekte in diesem Überwachungsbereich erkennt und Objektdaten dieser Objekte, zumindest deren Position ermittelt und bereitstellt,
wobei für eine vorgegebene Kalibrierungsperiode die ermittelten Positionen erkannter Objekte in Bezug auf die Straßenüberwachungseinrichtung (1) erfasst werden,
**dadurch gekennzeichnet, dass**
aus diesen erfassten Positionen erkannter Objekte eine akkumulierte Objektaufenthaltskarte (AVK1) gebildet wird,
eine Weltkoordinatenkarte (2(N...,E...)) der Fahrspuren oder Fahrspurmitten für den Überwachungsbereich mit deren Position in einem vorgegebenen Weltkoordinatensystem vorhanden ist, und
automatisiert durch rechnerbasiertes Verschieben und/oder Drehen der akkumulierten Objektaufenthaltskarte (AVK1) oder einer daraus abgeleiteten Objektaufenthaltskarte (AVK2) und rechnerbasiertes Ermitteln eines jeweiligen Übereinstimmungsmaßes mit der Weltkoordinatenkarte (2(N...,E...)) eine Position und Ausrichtung mit einem vorgegebenen Übereinstimmungsmaß bestimmt,
aus dieser, das vorgegebene Übereinstimmungsmaß aufweisenden Position und Ausrichtung die Istposition und Istausrichtung der Straßenüberwachungseinrichtung (1A) abgeleitet und die Position der Objekte entsprechend kalibriert wird.

2. Verfahren nach Anspruch 1, **dadurch gekennzeichnet, dass** die akkumulierte Objektaufenthaltskarte (AVK1) automatisiert rechnerbasiert den folgenden morphologischen Operationen unterzogen wird,
einer Dilatation und nachfolgend einer Erosion, wobei ein Filtermaß bei der Erosion um ein vorgegebenes Maß größer als das Filtermaß bei der Dilatation gesetzt ist, und diese so gefilterte Objektaufenthaltskarte (AVK2) anhand der Weltkoordinatenkarte (2(N...,E...)) ausgerichtet wird.

3. Verfahren nach Anspruch 1, **dadurch gekennzeichnet, dass** in einem ersten Schritt die Objektaufenthaltskarte (AVK1) oder daraus abgeleitete Objektaufenthaltskarte (AVK2) von einer vorgegebenen Ausgangsposition und Ausgangsausrichtung in vorgegebener erster Schiebeschrittweite verschoben und in der jeweiligen Position in vorgegebener erster Drehschrittweite gedreht und dabei jene Position und Winkelposition mit dem größten Übereinstimmungsmaß bestimmt wird.

4. Verfahren nach Anspruch 3, **dadurch gekennzeichnet, dass** nach dem ersten Schritt zumindest in einem weiteren Schritt die Objektaufenthaltskarte (AVK1) oder daraus abgeleitete Objektaufenthaltskarte (AVK2) um die im ersten Schritt ermittelte Position und Winkelausrichtung in vorgegebener zweiter, gegenüber der ersten feinerer Schiebeschrittweite nochmals verschoben und/oder in vorgegebener zweiter, gegenüber der ersten feinerer Drehschrittweite nochmals gedreht und geprüft wird, ob ein noch höheres Übereinstimmungsmaß erreicht werden kann.

5. Verfahren nach einem der vorangehenden Ansprüche, **dadurch gekennzeichnet, dass** das Übereinstimmungsmaß durch Kreuzkorrelationsberechnung ermittelt wird.

6. Verfahren nach einem der vorangehenden Ansprüche, **dadurch gekennzeichnet, dass** der Straßenüberwachungseinrichtung (1) eine grobe Sollposition und/oder Sollausrichtung in Bezug auf die Weltkoordinatenkarte (2(N...,E...)) vorgegeben ist und die Kalibrierung ausgehend von dieser Sollposition und/oder Sollausrichtung gestartet wird.

7. Verfahren nach einem der vorangehenden Ansprüche, **dadurch gekennzeichnet, dass** die erkannten Objekte hinsichtlich Objekttypenklassen und/oder deren Positionsänderungsgeschwindigkeit bewertet und in die akkumulierte Objektaufenthaltskarte nur jene Objekte aufgenommen werden, welche vorgegebenen Objekttypenklassen und/oder einem vorgegebenen Bereich der Positionsänderungsgeschwindigkeit entsprechen.

8. Verfahren nach einem der vorangehenden Ansprüche, **dadurch gekennzeichnet, dass** die Kalibrierungsperiode zeitlich variabel an die Anzahl erkannter Objekte angepasst wird, insbesondere verlängert wird, wenn innerhalb des ersten vorgegebenen Sollkalibrierungszeitraums nicht eine vorgegebene Anzahl von Objekten zur akkumulierten Objektaufenthaltskarte (AVK1) zugeordnet werden konnten und/oder das erreichbare Übereinstimmungsmaß unter einer Mindestwert bleibt.

9. Verfahren nach einem der vorangehenden Ansprüche, **dadurch gekennzeichnet, dass** die Kalibrierung im normalen Verkehr im Überwachungsbereich (S1) erfolgt, vorzugsweise zyklisch wiederholt wird, und nur anhand der im normalen Verkehr auftretenden Objekte und außer der Weltkoordinatenkarte (2(N...,E...)) keine weiteren Referenzen, insbesondere keine Erkennung und Vermessung von zusätzlichen Referenzpunkten, insbesondere ohne statische, vermessene Referenzpunkte im Überwachungsbereich oder Referenzpunkte an Testfahrzeugen mit definiertem Fahrverhalten erforderlich sind.

10. Straßenüberwachungssystem mit zumindest einer Straßenüberwachungseinrichtung (1) zur Durchführung des Verfahrens nach einem der vorangehenden Ansprüche sowie einer Recheneinheit (C) zur Auswertung der Signale der Straßenüberwachungseinrichtung,
**gekennzeichnet durch** eine in einem Speicher der Recheneinheit (C) lokal oder über eine Datenkommunikation in einem Cloudspeicher erreichbare Weltkoordinatenkarte (2(N...,E...)) der Fahrspuren oder Fahrspurmitten für den Überwachungsbereich mit deren Position in einem vorgegebenen Weltkoordinatensystem und
der Recheneinheit (C) lokal oder einem über eine Datenkommunikation erreichbaren Serverrechner zum (CC) automatisierten, rechnerbasierten Verarbeiten der Objektdaten, Bestimmen der akkumulierten Objektaufenthaltskarte (AVK1) und/oder Filtern dieser akkumulierten Objektaufenthaltskarte (AVK2) und/oder Verschieben und/oder Drehen dieser und Ermitteln der jeweiligen Übereinstimmungsmaße.

## Claims

1. A computer-based method for calibrating a road monitoring device (1A) which captures a predefined monitoring region (S1) and detects objects in this monitoring region and determines and provides object data relating to these objects, at least their position,
wherein, for a predefined calibration period, the determined positions of detected objects in relation to the road monitoring device (1) are captured,
**characterised in that**
an accumulated object presence map (AVK1) is formed from these captured positions of detected objects,
a world coordinate map (2(N...,E...)) of the lanes and lane centres for the monitoring region and their positions in a predefined world coordinate system exists, and
a position and orientation are determined automatically using a predefined measure of agreement with the world coordinate map by computer-based movement and/or rotation of the accumulated object presence map (AVK1) or an object presence map (AVK2) derived therefrom and computer-based determination of a respective measure of agreement with the world coordinate map (2(N...,E...)),
the actual position and actual orientation of the road monitoring device (1A) are derived from this position and orientation which has the predefined measure of agreement, and the position of the objects is calibrated accordingly.

2. The method of claim 1, **characterised in that** the accumulated object presence map (AVK1) is subjected to the following morphological operations in an automated computer-based manner, dilation and subsequent erosion, wherein a filter size during erosion is set to be greater than the filter size during dilation by a predefined measure,
and this object presence map (AVK2) filtered in this manner is oriented based on the world coordinate map (2(N...,E...)).

3. The method of claim 1, **characterised in that**, in a first step, the object presence map (AVK1) or the object presence map (AVK2) derived therefrom is moved from a predefined starting position and starting orientation in a predefined first movement increment and rotated in the respective position in a predefined first rotational increment, thereby determining that position and angular position with the greatest measure of agreement.

4. The method of claim 3, **characterised in that**, after the first step, the object presence map (AVK1) or the object presence map (AVK2) derived therefrom is moved again at least in one further step around the position and angular orientation determined in the first step in a predefined second movement increment that is finer than the first, and/or is rotated again in a predefined second rotational increment that is finer than the first, and a check is carried out in order to determine whether an even higher measure of agreement can be achieved.

5. The method of any one of the preceding claims, **characterised in that** the measure of agreement is determined by calculating cross-correlation.

6. The method of any one of the preceding claims, **characterised in that** a rough target position and/or target orientation in relation to the world coordinate map (2(N...,E...)) is/are predefined for the road monitoring device (1) and the calibration is started from said target position and/or target orientation.

7. The method of any one of the preceding claims, **characterised in that** the detected objects are evaluated with respect to object type classes and/or their position change rate, and only those objects which correspond to predefined object type classes and/or a predefined range of the position change rate are included in the accumulated object presence map.

8. The method of any one of the preceding claims, **characterised in that** the calibration period is adjusted to the number of detected objects, in particular extended, in a variable manner over time, if a predefined number of objects could not be assigned to the accumulated object presence map (AVK1) within the first predefined target calibration period and/or the achievable measure of agreement remains below a minimum value.

9. The method of any one of the preceding claims, **characterised in that** the calibration is carried out in normal traffic in the monitoring region (S1), is preferably repeated cyclically and is carried out only on the basis of the objects occurring in normal traffic and, apart from the world coordinate map (2(N...,E...)), no further references are required, in particular no detection and measurement of additional reference points, in particular no static, measured reference points in the monitoring region or reference points on test vehicles with a defined driving behaviour.

10. A road monitoring system having at least one road monitoring device (1) of any one of the preceding claims and a computing unit (C) for evaluating the signals from the road monitoring device,
**characterised by** a world coordinate map (2(N...,E...)) of the lanes or lane centres for the monitoring region with their position in a predefined world coordinate system, which map is reachable locally in a memory of the computing unit (C) or in a cloud memory via data communication, and
the computing unit (C) reachable locally or a server computer (CC) reachable via data communication for the automated, computer-based processing of the object data, determination of the accumulated object presence map (AVK1) and/or filtering of said accumulated object presence map (AVK2) and/or movement and/or rotation of the latter and determination of the respective measures of agreement.

## Revendications

1. Procédé informatisé pour étalonner un dispositif de surveillance de route (1A) qui détecte une zone de surveillance prédéfinie (S1) et reconnait des objets dans cette zone de surveillance, et détermine et fournit des données d'objet de ces objets, au moins leur position,
dans lequel les positions déterminées d'objets reconnus par rapport au dispositif de surveillance de route (1) sont détectées pendant une période d'étalonnage prédéfinie,
**caractérisé en ce que**
une carte de localisation cumulative d'objets (AVK1) est créée à partir de ces positions détectées d'objets reconnus,
une carte de coordonnées mondiales (2(N...,E...)) des voies de circulation ou des centres de voies de circulation pour la zone de surveillance avec leur position est présente dans un système de coordonnées mondiales prédéfini, et détermine une position et une orientation présentant un degré de concordance prédéfini de manière automatisée par l'intermédiaire d'un déplacement et/ou d'une rotation informatisé(e) de la carte de localisation cumulative d'objets (AVK1) ou d'une carte de localisation d'objets dérivée de celle-ci (AVK2) et par l'intermédiaire d'une détermination informatisée d'un degré de concordance respectif avec la carte de coordonnées mondiales (2(N...,E...)),
et la position réelle et l'orientation réelle du dispositif de surveillance de route (1A) est dérivée de cette position et orientation présentant le degré de concordance prédéfini et la position des objets est étalonnée de manière correspondante.

2. Procédé selon la revendication 1, **caractérisé en ce que** la carte de localisation cumulative d'objets (AVK1) est soumise de manière informatisée et automatisée aux opérations morphologiques suivantes,
une dilatation suivie d'une érosion, dans lequel une taille de filtre pour l'érosion est définie de manière à être supérieure d'une valeur prédéterminée à la taille de filtre pour la dilatation,
et cette carte de localisation d'objets ainsi filtrée (AVK2) est orientée à l'aide de la carte de coordonnées mondiales (Z(N...,E...)).

3. Procédé selon la revendication 1, **caractérisé en ce que**, dans une première étape, la carte de localisation d'objets (AVK1) ou la carte de localisation d'objets dérivée de celle-ci (AVK2) est déplacée d'une position de départ et d'une orientation de départ prédéfinies selon un premier pas de décalage prédéfini et tournée dans la position respective selon un premier pas de rotation prédéfini et, lors de ce processus, la position et la position angulaire présentant le degré de concordance le plus élevé sont déterminées.

4. Procédé selon la revendication 3, **caractérisé en ce qu'**après la première étape, au moins dans une étape ultérieure, la carte de localisation d'objets (AVK1) ou la carte de localisation d'objets dérivée de celle-ci (AVK2) est à nouveau déplacée de la position et de l'orientation angulaire déterminées à la première étape selon un deuxième pas de décalage prédéfini, plus fin que le premier, et/ou est à nouveau tournée selon un deuxième pas de rotation prédéfini, plus fin que le premier, et il est vérifié si un degré de concordance encore plus élevé peut être atteint.

5. Procédé selon l'une quelconque des revendications précédentes, **caractérisé en ce que** le degré de concordance est déterminé par calcul de corrélation croisée.

6. Procédé selon l'une quelconque des revendications précédentes, **caractérisé en ce que** le dispositif de surveillance de route (1) reçoit une position cible approximative et/ou une orientation cible par rapport à la carte de coordonnées mondiales (2 (N...,E...)) et l'étalonnage est démarré à partir de cette position cible et/ou de cette orientation cible.

7. Procédé selon l'une quelconque des revendications précédentes, **caractérisé en ce que** les objets reconnus sont évalués en fonction des classes de types d'objets et/ou de leur vitesse de changement de position et seuls les objets qui correspondent à des classes de types d'objets prédéfinies et/ou à une plage prédéfinie de la vitesse de changement de position sont inclus dans la carte de localisation cumulative d'objets.

8. Procédé selon l'une quelconque des revendications précédentes, **caractérisé en ce que** la période d'étalonnage est adaptée de manière variable dans le temps au nombre d'objets reconnus, en particulier est prolongée si un nombre prédéfini d'objets n'a pas pu être attribué à la carte de localisation cumulative d'objets (AVK1) au cours de la première période d'étalonnage cible prédéfinie et/ou le degré de concordance atteignable reste inférieur à une valeur minimale.

9. Procédé selon l'une quelconque des revendications précédentes, **caractérisé en ce que** l'étalonnage a lieu en circulation normale dans la zone de surveillance (S1), est de préférence répété de manière cyclique, et uniquement sur la base des objets apparaissant dans la circulation normale et, en dehors de la carte de coordonnées mondiales (2(N...,E...)), aucune autre référence, en particulier aucune détection et mesure de points de référence supplémentaires, en particulier sans points de référence statiques mesurés dans la zone de surveillance ou points de référence sur des véhicules d'essai avec un comportement de conduite défini, ne sont nécessaires.

10. Système de surveillance de route comprenant au moins un dispositif de surveillance de route (1) pour la mise en œuvre du procédé selon l'une quelconque des revendications précédentes et une unité de calcul (C) pour l'évaluation des signaux du dispositif de surveillance de route,
**caractérisé par** une carte de coordonnées mondiales (2(N...,E...)) des voies de circulation ou des centres de voies de circulation pour la zone de surveillance, accessible localement dans une mémoire de l'unité de calcul (C) ou via une communication de données dans un stockage en nuage, cette carte comprenant leur position dans un système de coordonnées mondiales prédéfini et
dans l'unité de calcul (C), localement ou dans un ordinateur serveur accessible via une communication de données, pour (CC) le traitement automatisé et informatisé des données d'objet, la détermination de la carte de localisation cumulative d'objets (AVK1) et/ou le filtrage de cette carte de localisation cumulative d'objets (AVK2) et/ou le déplacement et/ou la rotation de celle-ci, ainsi que la détermination des degrés de correspondance respectives.
